# EUROPÄISCHE PATENTSCHRIFT

(11) **EP 3 916 649 B1**
(45) Veröffentlichungstag und Bekanntmachung des Hinweises auf die Patenterteilung: **23.04.2025**
(21) Anmeldenummer: 21175813.1
(22) Anmeldetag: 25.05.2021
(51) Int. Cl.: G06Q 10/00

(54) **VERFAHREN ZUR DURCHFÜHRUNG EINER ANALYSE, IDENTIFIKATION UND/ODER FEHLERBEHEBUNG UND EIN KOMMUNIKATIONSSYSTEM ZUR DURCHFÜHRUNG DES VERFAHRENS**
METHOD FOR PERFORMING AN ANALYSIS, IDENTIFICATION AND / OR ERROR RECTIFICATION AND A COMMUNICATION SYSTEM FOR CARRYING OUT THE METHOD
PROCÉDÉ DE MISE EN UVRE D'UNE ANALYSE, D'UNE IDENTIFICATION ET/OU D'UN DÉPANNAGE ET SYSTÈME DE COMMUNICATION DE MISE EN UVRE DU PROCÉDÉ

(30) Priorität: 29.05.2020 DE 102020114443
(43) Veröffentlichungstag der Anmeldung: 01.12.2021
(73) Patentinhaber: Palfinger Tail Lifts GmbH, 27777 Ganderkesee (DE)
(72) Erfinder: Boch, Andreas, 26209 Hatten (DE); Popken, Uwe, 26209 Hatten (DE); Jerzembeck, Anna-Lena, 27777 Ganderkesee (DE); Sfendonis, Fotis, 60431 Frankfurt am Main (DE); Gerkmann, Philipp, 28195 Bremen (DE)
(74) Vertreter: Hoener, Matthias

(56) Entgegenhaltungen:
- US-A1- 2019 318 549
- KENNEDYLAAN JOHN F: "Connected Vehicle Sensor Platform", 6 March 2015 (2015-03-06), XP055853233, Retrieved from the Internet <URL:https://www.2mel.nl/web/wp-content/uploads/2015/03/Connected-Vehicle-Sensor-Platform.pdf> [retrieved on 20211020]

## Beschreibung

Die Erfindung betrifft ein Verfahren zur Durchführung einer Analyse, Identifikation und/oder Fehlerbehebung gemäß dem Anspruch 1. Des Weiteren betrifft die Erfindung ein Kommunikationssystem zur Durchführung des Verfahrens gemäß Anspruch 16.

Der Betrieb bzw. die Steuerung sowie Ansteuerung von Fahrzeugen und deren Komponenten erfolgt zunehmend prozessorgestützt, d. h. elektronisch. So werden rein mechanisch funktionierende Komponenten zunehmend ersetzt durch Komponenten, die ausschließlich elektronisch ansteuerbar sind und mit entsprechender Technik bzw. Motoren ausgestattet sind. Auch wenn diese Entwicklung viele Vorteile mit sich bringt, so wird insbesondere eine Analyse von Fehlfunktionen, Störungen und Defekten, deren Identifikation sowie Fehlerbehebungen für die Fahrzeugführer, die normalerweise über kein entsprechendes Fachwissen verfügen, zunehmend schwerer bzw. unmöglich. Wohingegen früher Fehlfunktionen bzw. Defekte noch mit Schraubendreher, Maulschlüssel oder Spannungsprüfer zu beheben waren, sind heute spezielle Analysegeräte notwendig, die direkt mit einer Ausleseeinheit an dem Fahrzeug bzw. der defekten Komponente des Fahrzeugs zu koppeln ist. Da Fahrzeuge bzw. die Komponenten in den allermeisten Fällen nicht mit derartigen Spezialgeräten ausgestattet sind, ist die Analyse bzw. Identifikation von Fehlfunktionen, aber auch eine Wartung nur in spezialisierten Werkstätten oder durch ein mobiles Servicepersonal, möglich. Dies stellt insbesondere für den Betrieb von Lastkraftwagen, Lieferfahrzeugen, Baufahrzeugen oder sonstigen Fahrzeugen, die betrieblich genutzt werden, ein Problem dar. Da Probleme bzw. Fehler oder Defekte an Fahrzeugen bzw. Lastkraftwagen oder dergleichen und insbesondere an Komponenten an diesen Fahrzeugen in den allermeisten Fällen nicht von den Fahrzeugführern vor Ort analysiert und behoben werden können, ist das Fahrzeug in eine Servicewerkstatt zu bringen. Dies ist allerdings mit einem erhöhten Zeitaufwand bzw. Zeitverlust verbunden, der zu Störungen in komplexen Lieferketten führen kann. Auch die Analyse sowie Fehlerbehebung durch eine mobile Servicekraft führt zu ähnlichen Zeitverlusten. Sofern eine Komponente eines Lastkraftwagens oder dergleichen eine Fehlfunktion aufweist, kann dies zur Stilllegung des gesamten Fahrzeugs führen. Dies kann nicht nur zu wirtschaftlichen Schäden führen, sondern auch eine Gefahrenquelle für den Fahrzeugführer selbst und Dritte darstellen. Wenn sich beispielsweise eine Hubladebühne eines Lastkraftwagens aufgrund eines Defektes nicht mehr öffnen oder nicht mehr schließen lässt, hat dies erheblichen Einfluss auf die Erfüllung des Lieferauftrags. Insbesondere für den Fall, dass sich eine Hubladebühne bzw. Ladebordwand nicht mehr schließen lässt, muss der Lastkraftwagen vor Ort durch eine mobile Servicekraft repariert werden. Dabei kann es zu einer Blockierung einer Straße oder einer Laderampe für mehrere Stunden kommen. Davon abgesehen wird auch die Lieferkette für eine längere Zeit unterbrochen.

In dem Dokument "Connected Vehicle Sensor Platform" (Coen Lauwerijssen, 2M Engineering) wird eine bidirektionale Kommunikationsplattform für den Austausch von fahrzeugbezogenen Daten zwischen einem Fahrzeug und einem zentralen Server über ein Mobiltelefon offenbart.

Der vorliegenden Erfindung liegt die Aufgabe zugrunde, ein Verfahren zur Durchführung einer Analyse, Identifikation und/oder Fehlerbehebung sowie ein Kommunikationssystem zur Durchführung des Verfahrens zu schaffen, mit dem die Analyse, Identifikation und/oder Fehlerbehebung auf eine besonders einfache sowie zeiteffiziente Art und Weise erfolgen kann.

Eine Lösung dieser Aufgabe wird durch die Maßnahmen des Anspruchs 1 beschrieben. Demnach ist es vorgesehen, dass zur Durchführung einer Analyse, Identifikation und/oder Fehlerbehebung, vorzugsweise einer Fernwartung, einer Hubladebühne eines Lastkraftwagens, zwischen mindestens einem mobilen Kommunikationsmittel und einer Steuereinheit der Hubladebühne eine Datenverbindung hergestellt wird.

Bei dem mobilen Kommunikationsmittel kann es sich um ein Mobiltelefon, Smartphone, Tablet oder dergleichen handeln. Dieses Kommunikationsmittel wird von einer Bedienperson bzw. einem Fahrzeugführer des Fahrzeugs bzw. des Lastkraftwagens mitgeführt. Dieses mobile Kommunikationsmittel kann allerdings auch durch eine Servicekraft bedient werden. Bei der Verbindung zwischen dem Kommunikationsmittel und der Steuereinheit der Komponente (Hubladebühne) kann es sich um eine Nahfeldverbindung handeln. Da sich der Fahrzeugführer in direkter Umgebung zu der Komponente des Fahrzeugs befindet, kann die Verbindung beispielsweise über Funk bzw. Bluetooth^{®} erfolgen. Zwischen dem Kommunikationsmittel und der Steuereinheit der Komponente können zunächst Identifikationsdaten zur Identifizierung des mobilen Kommunikationsmittels sowie der Fahrzeugkomponenten bzw. des Fahrzeugs ausgetauscht werden sowie Verifikationsdaten, Betriebsparameter und ggf. Informationsdaten bzgl. eines aufgetretenen Fehlers.

Die Daten, die von der Steuereinheit der Komponente an das mobile Kommunikationsmittel übertragen werden bzw. die von dem mobilen Kommunikationsmittel ausgelesen werden, werden als ausgehende Daten bezeichnet. Diese ausgehenden Daten werden in einem weiteren Verfahrensschritt über eine weitere Verbindung, bei der es sich um eine Fernfeldverbindung handeln kann, an ein elektronisches Datenbearbeitungsnetzwerk übertragen. Bei diesem elektronischen Datenbearbeitungsnetzwerk kann es sich um einen Server bzw. eine Cloud handeln, die fernab der Fahrzeugposition positioniert ist. Dieses elektronische Datenbearbeitungsnetzwerk kann zentral aber auch dezentral lokalisiert sein und zwar derart, dass das mobile Kommunikationsmittel ortsunabhängig eine Fernfeldverbindung mit diesem Netzwerk aufbauen kann.

In einem weiteren Schritt können in Abhängigkeit von den ausgehenden Daten von dem Datenbearbeitungsnetzwerk Daten direkt an das mobile Kommunikationsmittel zurückübertragen werden. Diese von dem Datenbearbeitungsnetzwerk an das mobile Kommunikationsmittel übertragenen Daten werden eingehende Daten genannt. Alternativ ist es denkbar, dass die ausgehenden Daten zunächst von dem Datenbearbeitungsnetzwerk an eine Netz-Applikation übertragen werden und von dieser Netz-Applikation sodann eingehende Daten an das mobile Kommunikationsmittel übertragen werden. Diese eingehenden Daten können Informationen bzgl. der Analyse, der Identifikation und/oder der Fehlerbehebung sowie der Fernwartung zu der defekten Komponente aufweisen. Durch diesen Austausch von Daten zwischen der Steuereinheit der Fahrzeugkomponenten und dem mobilen Kommunikationsmittel sowie dem Kommunikationsmittel und dem Datenbearbeitungsnetzwerk bzw. der Netz-Applikation lässt sich auf eine einfache sowie zeiteffiziente Art und Weise die Analyse, die Identifikation sowie die Fehlerbehebung und ggf. eine Fernwartung erreichen.

Vorzugsweise ist es weiter vorgesehen, dass der Austausch der Daten zwischen der Komponente und dem mindestens einen mobilen Kommunikationsmittel durch die Bedienperson bzw. dem Fahrzeugführer initialisiert wird. Alternativ ist es denkbar, dass bei einer Fehlfunktion der Komponente der Datenaustausch zwischen der Komponente und dem mindestens einen mobilen Kommunikationsmittel automatisch initialisiert wird. Sobald die Bedienperson somit eine Fehlfunktion, beispielsweise der Hubladebühne, feststellt, kann durch entsprechende Betätigung bzw. Bedienung des mobilen Kommunikationsmittels der Austausch der Daten bzw. ausgehenden Daten zwischen der Steuereinheit der Hubladebühne und dem Smartphone initialisiert werden. Gleichermaßen ist es denkbar, dass die Fehlfunktion bereits durch die Steuereinheit der Hubladebühne erkannt wird und ein entsprechendes Signal an das mobile Kommunikationsmittel übertragen wird. Der Fahrzeugführer erhält sodann sogleich Informationen darüber, dass eine Fehlfunktion vorliegt und ggf. welche Schritte im Weiteren zu tätigen sind, um diese Fehlfunktion zu beheben.

Ein weiteres Ausführungsbeispiel der vorliegenden Erfindung kann es vorsehen, dass in Abhängigkeit von den Identifikationsdaten, Verifikationsdaten, Betriebsparametern und/oder Fehlerinformationsdaten ein weiterer Austausch von Daten zwischen dem Datenbearbeitungsnetzwerk und der mindestens einen Netz-Applikation und/oder einem Flottenmanager von mehreren Fahrzeugen erfolgt, insbesondere initiiert wird. Bei den Identifikationsdaten kann es sich um eine Kennnummer der Komponente und/oder eine Erkennungsnummer des mobilen Kommunikationsmittels bzw. des Fahrzeugführers handeln. Der Austausch dieser Identifikationsdaten kann zu einem weiteren Austausch von Verifikationsdaten führen, die durch die Bedienperson bzw. die Steuereinheit bestätigt werden müssen, um die Bedienperson zu authentifizieren. Bei den Betriebsparametern kann es sich um sämtliche Eigenschaften bzw. Kennzahlen oder Werte handeln, die im Zusammenhang mit dem Betrieb der Komponente stehen. Auf der Steuereinheit kann bereits eine Vielzahl von Fehlerinformationsdaten gespeichert sein, die eine eindeutige Zuordnung eines Fehlers zu einem Code gestatten. Eine Servicekraft kann durch Auslesen dieser Fehlerinformationsdaten sofort erkennen, durch was ein Defekt ausgelöst wurde bzw. worin der Schaden besteht. Bei der Netz-Applikation kann es sich beispielsweise um ein Programm handeln, über welches ein Servicepartner, der für den Betrieb des Fahrzeugs zuständig ist, über das Datenbearbeitungsnetzwerk auf das mobile Kommunikationsmittel bzw. die Steuereinheit zugreifen kann. Dieser Servicepartner kann zentral und dezentral an einem nahezu beliebigen Ort sitzen und sich über eine Ferndatenverbindung mit dem Netzwerk bzw. Kommunikationsmittel verbinden. Der Flottenmanager organisiert die Fahrpläne bzw. Lieferpläne von einer Vielzahl von Fahrzeugen, die zu der gleichen Flotte gehören.

Erfindungsgemäß kann es vorgesehen sein, dass sich der Flottenmanager und/oder der Servicepartner unter einer zu vergebenen Kennung mit dem Datenbearbeitungsnetzwerk verbindet. So kann es beispielsweise erforderlich sein, dass sich der Flottenmanager und/oder der Servicepartner für den Datenaustausch mit dem Datenbearbeitungsnetzwerk und/oder dem mobilen Kommunikationsmittel zunächst bei einem Anbieter bzw. Betreiber oder Hersteller des Fahrzeugs oder der Komponente registrieren müssen, um auf das Datenbearbeitungsnetzwerk zugreifen zu können. Dies bietet die Möglichkeit, dass ausgehende Daten von dem mobilen Kommunikationsmittel an das Datenbearbeitungsnetzwerk übertragen werden und verschiedene Servicepartner bzw. Flottenmanager auf diese Daten zugreifen können, um ggf. dem Fahrzeugführer ihren Service anzubieten. Dadurch kann ortsunabhängig eine sehr zeiteffiziente Analyse, Identifikation sowie Fehlerbehebung bzw. Wartung des Fahrzeugs oder der Komponente sichergestellt und/oder angeboten werden.

Darüber hinaus kann es vorgesehen sein, dass in Abhängigkeit von den Identifikationsdaten, Verifikationsdaten, Betriebsparametern und/oder Fehlerinformations-daten eine direkte Sprach- und/oder Videokommunikation zwischen der mindestens einen Netz-Applikation und dem mobilen Kommunikationsmittel aufgebaut wird. Wenn sich so beispielsweise aus den Identifikationsdaten oder den Verifikationsdaten oder den Betriebsparametern und/oder den Fehlerinformationsdaten ergibt, dass ein direktes Gespräch bzw. eine Videokommunikation zwischen einem Servicemitarbeiter der Netz-Applikation und dem Fahrzeugführer zu einer schnellen Bearbeitung bzw. Fehlerbehebung führt, kann die direkte Verbindung über das mobile Kommunikationsmittel hergestellt werden. Dies kann über eine konventionelle Telefonverbindung erfolgen. Da die ausgehenden Daten der Steuereinheit zuvor bereits der Netz-Applikation zugespielt wurden, kann diese bzw. der Servicemitarbeiter der Bedienperson gezielte Anweisungen zur Behebung der Störung vermitteln. Sofern erforderlich kann dies auch in Kombination mit einer Videoverbindung erfolgen.

Insbesondere ist es denkbar, dass in Abhängigkeit von den Identifikationsdaten, Verifikationsdaten, Betriebsparametern und/oder Fehlerinformationsdaten über das mobile Kommunikationsmittel ein Datenaustausch zwischen der mindestens einen Netz-Applikation und/oder dem Flottenmanager und der Steuereinheit der mindestens einen Komponente aufgebaut wird. Einige Funktionen der Fahrzeugkomponente können die Eingabe von bestimmten Codes bzw. Befehlen erfordern. So ist es denkbar, dass für die Initialisierung der Fehleranalyse oder eines Notbetriebs ein bestimmter Code an die Steuereinheit zu übertragen ist. Dies kann erfindungsgemäß direkt über die Netz-Applikation oder den Flottenmanager erfolgen. Dabei wird eine Fernfeldverbindung zwischen der Netz-Applikation und dem mobilen Kommunikationsmittel hergestellt oder eine Verbindung zwischen dem Flottenmanager, dem Datenbearbeitungsnetzwerk und dem mobilen Kommunikationsmittel. Das mobile Kommunikationsmittel überträgt im Weiteren die Daten als eingehende Daten an die Steuereinheit der Komponente.

Bevorzugterweise ist es vorgesehen, dass in Abhängigkeit von den Identifikationsdaten, Verifikationsdaten, Betriebsparametern und/oder Fehlerinformationsdaten die Netz-Applikation weitere Maßnahmen initialisiert, wie beispielsweise Bestellung und Anlieferung von Ersatzteilen, Koordination eines Serviceauftrags, Umprogrammierung der Software der Komponente, Update der Software der Komponente, Fernsteuerung wenigstens einiger, insbesondere für die Bedienperson gesperrte Funktionen, insbesondere *GEO-Fencing.* Wenn sich aus den ausgehenden Daten ergibt, dass ein defektes Teil der Komponente auszutauschen ist, kann erfindungsgemäß durch die Netz-Applikation direkt ein Ersatzteil bestellt und zu dem Standort des Fahrzeuges geliefert werden. Sofern erforderlich kann gleichzeitig ein Servicemitarbeiter zum Einbau dieser Komponente zu dem Ort des Fahrzeugs navigiert werden. Gleichermaßen kann über die Netz-Applikation ein Softwareupdate oder eine erforderliche Umprogrammierung der Software der Komponente erfolgen. Sofern beispielsweise einige Funktionen der Komponente für die Bedienperson nicht freigeschaltet sind, können wenigstens kurzfristig diese Funktonen für die Behebung und/oder Analyse des Fehlers für die manuelle Bedienung durch den Fahrzeugführer freigegeben werden.

Vorzugsweise kann es weiter denkbar sein, dass in Abhängigkeit von den Identifikationsdaten, den Verifikationsdaten, den Betriebsparametern und/oder den Fehlerinformationsdaten der Flottenmanager ein Ersatzfahrzeug zu dem Fahrzeug, das die Daten übertragen hat, bestellt oder einen Lieferplan für Waren, die von dem Fahrzeug, das die Daten übertragen hat, transportiert wird, anpasst. Wenn sich aus den ausgehenden Daten ergibt, dass das Fahrzeug die Weiterfahrt wenigstens kurzfristig nicht fortsetzen kann, schickt der Flottenmanager ein entsprechendes Ersatzfahrzeug zu dem Ort des defekten Fahrzeugs. Gleichermaßen können Lieferpläne sowie Lieferketten angepasst werden, sodass es zu keinen zeitlichen Verzögerungen kommt.

Darüber hinaus ist es denkbar, dass für den Austausch der Daten im Nahfeld ein eigenes proprietäres Protokoll, insbesondere Funk, WLAN oder Bluetooth^{®} und im Fernfeld Protokolle für die Fernfeldkommunikation verwendet werden, nämlich Funk, WLAN, 5G oder IEEE802.1, wobei der Austausch der Daten verschlüsselt erfolgt. Dadurch wird ein sicherer Austausch der Daten sowohl im Nahfeld als auch im Fernfeld garantiert.

Ein weiteres vorteilhaftes Ausführungsbeispiel der vorliegenden Erfindung kann es vorsehen, dass auf das mobile Kommunikationsmittel für die Fernwartung und/oder den Datenaustausch eine, insbesondere kostenfrei aus einem *App-Store* ladbare, Anwendungssoftware (Android, IOS App) geladen bzw. in Betrieb genommen wird. Für den Datenaustausch mit der Steuereinheit sowie dem Datenbearbeitungsnetzwerk, dem Flottenmanager und/oder der Netz-Applikation kann die entsprechende Anwendersoftware bzw. *App* ggf. von dem Fahrzeugführer auf sein mobiles Kommunikationsmittel geladen werden. Nach einer entsprechenden Authentifizierung sowie Validierung können die genannten Verbindungen hergestellt werden.

Darüber hinaus kann es vorgesehen sein, dass es sich bei den eingehenden Daten um Fehlerinformationsdaten, Steuerbefehle, Bedienhinweise und/oder Vorschläge zur Fehlerbehebung handelt. Dadurch erhält der Fahrzeugführer direkte Anweisungen, um den Fehler an der Komponente zu beheben.

Eine weitere wesentliche Maßnahme der Erfindung kann es vorsehen, dass für ein *Pairing,* d. h. für die Verbindung zwischen der Komponente und dem mindestens einen mobilen Kommunikationsmittel, ein Code, insbesondere eine Tastkombination, in eine Bedieneinheit der Komponente eingegeben wird, wobei der eingegebene Code von der Bedieneinheit der Komponente auf Validität geprüft wird. Dadurch kann sichergestellt werden, dass nicht jedes mobile Kommunikationsmittel eine Verbindung zu dem Fahrzeug bzw. der Komponente herstellen kann. Dadurch lässt sich insbesondere ein Missbrauch dieses Verfahrens unterbinden. Nur wer Kenntnis über diesen Code bzw. die Tastenkombination hat, kann die sichere Verbindung zwischen dem mobilen Kommunikationsmittel und der Komponente herstellen.

Weiter ist es denkbar, dass die Bedieneinheit bzw. die Steuereinheit bei einer positiven Validitätsprüfung des Codes über ein Protokoll, vorzugsweise über ein proprietäres CAN-Bus-Protokoll, das mindestens ein mobiles Kommunikationsmittel aktiviert, insbesondere in einen Modus zur Durchführung einer Analyse, Identifikation und/oder Fehlerbehebung versetzt. Durch dieses *Pairing* zwischen dem mobilen Kommunikationsmittel und der Bedieneinheit mittels Tastencode lassen sich bisherige Nachteile ausräumen. Bisherige Lösungen waren von der Bedienperson schlecht erreichbar bzw. den Witterungsbedingungen ausgesetzt, sodass es hier öfters zu Ausfällen kam. Da das *Pairing* allerdings für die Herstellung der Verbindung zwischen dem mobilen Kommunikationsmittel und der Komponente wesentlich ist, kann durch das beschriebene Verfahren die Zuverlässigkeit des gesamten Systems verbessert werden.

Insbesondere sieht es die Erfindung vor, dass im Falle einer Störung und/oder eines Defektes der Komponente und/oder einer Sensorik der Komponente, insbesondere von einer Bedienperson über eine Bedieneinheit der Komponente oder über das mobile Kommunikationsmittel ein Notbetrieb der mindestens einen Komponente gestartet wird, wobei durch diesen Notbetrieb die notwendigen Funktionen für die Steuerung der Komponente zur Verfügung gestellt werden. Im Normalbetrieb, d. h. im störungsfreien Betrieb, beschränken sich die für den Fahrzeugführer freigegebenen Funktionen auf die wesentlichen Steuerbefehle. Weitere Befehle für einen Notbetrieb sind im Normalbetrieb nicht freigeschaltet. Diese Freischaltung kann allerdings im Falle einer Störung über das Kommunikationsmittel freigegeben werden. Dadurch können entsprechende Freigabecodes entweder durch die Bedienperson selbst oder durch die Netz-Applikation erfolgen. Mittels der Notfunktionen kann die Hubladebühne wenigstens geschlossen werden bzw. geöffnet werden. Es ist außerdem vorgesehen, dass bei Aktivierung des Notbetriebs durch das mobile Kommunikationsmittel ein akustisches und/oder ein optisches Signal erzeugt wird, durch welches die Bedienperson über die Störung bzw. den Defekt der Komponenten bzw. der Sensorik sowie über die eingeschränkte Funktionalität der Komponente und insbesondere die damit verbundenen Gefahren informiert wird. Dies ist insbesondere für den Fall wesentlich, indem der Notbetrieb durch externe Steuerung bzw. Fernwartung von der Netz-Applikation initiiert wird.

Schließlich ist es denkbar, dass nach einer Betätigung eines Notbetriebsignalgebers, vorzugsweise einer Notbetriebschaltfläche oder Knopfes, eine Nahfeldkommunikation, insbesondere eine Bluetooth^{®}-Verbindung, zwischen der Bedieneinheit der Komponente und der mobilen Kommunikationsmittel hergestellt wird und über einen CAN-Bus die Verbindung zur Steuerung der Komponente erfolgt. Die weitere Steuerung der Komponente kann sodann entweder direkt von der Bedienperson über das Kommunikationsmittel erfolgen oder in Fernwartung durch die Netz-Applikation oder den Flottenmanager.

Ein Kommunikationssystem zur Durchführung des Verfahrens wird durch die Merkmale des Anspruchs 17 beschrieben. Demnach ist es vorgesehen, dass das Kommunikationssystem ausgebildet ist zur Durchführung eines Verfahrens zur Durchführung einer Analyse, Identifikation und/oder Fehlerbehebung, vorzugsweise einer Fernwartung, mindestens einer Komponente, insbesondere einer Hubladebühne eines Fahrzeugs, vorzugsweise eines Lastkraftwagens, gemäß Anspruch 1. Dazu weist das System mindestens ein mobiles Kommunikationsmittel und eine Steuereinheit der mindestens einen Komponente sowie ein Datenbearbeitungsnetzwerk und/oder eine Netz-Applikation auf.

Ein bevorzugtes Ausführungsbeispiel der Erfindung wird nachfolgend anhand der Zeichnung näher beschrieben. In dieser zeigen:
Fig. 1 schematische Darstellung eines Verfahrens,
Fig. 2a eine Darstellung eines Startbildschirmes eines Kommunikationsmittels,
Fig. 2b eine Darstellung einer Bedienoberfläche des Kommunikationsmittels,
Fig. 2c eine Darstellung einer weiteren Bedienoberfläche,
Fig. 2d eine Darstellung einer weiteren Bedienoberfläche,
Fig. 2e eine Darstellung einer weiteren Bedienoberfläche,
Fig. 2f eine Darstellung einer weiteren Bedienoberfläche,
Fig. 2g eine Darstellung einer weiteren Bedienoberfläche,
Fig. 2h eine Darstellung einer weiteren Bedienoberfläche, und
Fig. 2i eine Darstellung einer weiteren Bedienoberfläche.

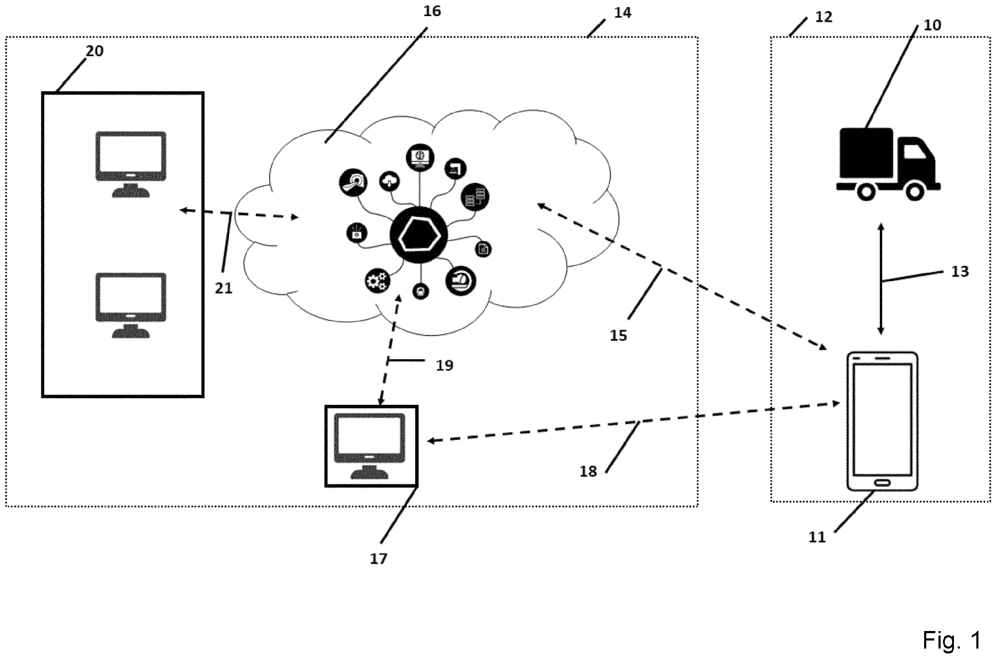

In der Fig. 1 ist das erfindungsgemäße Verfahren schematisch dargestellt. Für das Verfahren zur Durchführung einer Analyse, einer Identifikation und/oder Fehlerbehebung sowie einer Fernwartung einer Komponente eines Fahrzeuges 10 ist eine Bedienperson bzw. ein Fahrzeugführer mit einem mobilen Kommunikationsmittel 11 ausgestattet. Bei dem Fahrzeug 10 kann es sich, wie beispielhaft in der Fig. 1 dargestellt, um einen Lastkraftwagen handeln. Gleichermaßen ist es jedoch auch denkbar, dass es sich bei dem Fahrzeug 10 um eine andere Art Fahrzeug handelt wie beispielsweise einen PKW, ein Baufahrzeug, eine Landmaschine oder dergleichen. Bei der vorgenannten Komponente des Fahrzeuges 10 kann es sich um eine an dem Fahrzeug 10 bzw. einem Lastkraftwagen angeordnete Hubladebühne handeln. Genauso ist es jedoch auch denkbar, dass es sich bei der Komponente des Fahrzeuges 10 um etwas anderes als eine Hubladebühne handelt. Bei dem Kommunikationsmittel 11 kann es sich gemäß der Fig. 1 um ein Mobiltelefon bzw. Smartphone handeln. Darüber hinaus sind aber auch andere mobile Kommunikationsmittel, wie beispielsweise ein Tablet, geeignet, um das erfindungsgemäße Verfahren durchzuführen.

Im Wesentlichen dient das hier beschriebene Verfahren dazu, eine Störung oder eine Fehlermeldung bzw. einen Defekt der Komponente des Fahrzeuges 10 zu analysieren, zu identifizieren und/oder zu beheben oder die Komponente zu warten. Sobald es Anzeichen dafür gibt, dass eine Störung, ein Defekt oder ein Fehler vorliegt, wie beispielsweise eine Einschränkung der Funktionalität der Komponente, ist in einem ersten Schritt 12, in der Fig. 1 als gestrichelter Kasten 12 dargestellt, eine Verbindung zwischen dem mobilen Kommunikationsmittel 11 und dem Fahrzeug 10 herzustellen. Diese Verbindung 13, in der Fig. 1 als Doppelpfeil 13 dargestellt, kann entweder von einer Steuereinheit bzw. Bedieneinheit der Komponente automatisch nach Erkennung einer Störung bzw. eines Fehlers initiiert werden, sodass auf dem Kommunikationsmittel 11 eine entsprechende Information angezeigt wird. Alternativ kann der Führer des Fahrzeuges 10 über das Kommunikationsmittel 11 die Verbindung 13 zu der Komponente des Fahrzeuges 10 herstellen bzw. initiieren. Erfindungsgemäß handelt es sich bei der Verbindung 13 um eine Nahfeldkommunikation, wie beispielsweise eine Bluetooth^{®}-Verbindung oder eine WLAN-Verbindung. Bei dieser Verbindung 13 koppelt das Kommunikationsmittel 11 mit der Steuereinheit der Komponente. Es sind Ausführungsbeispiele denkbar, bei denen die Initiierung dieser Verbindung 13 erst verifiziert werden muss, nachdem erfolgreich entsprechende Kennwörter oder Codes ausgetauscht wurden.

Für die Durchführung des Verfahrens bzw. zur Initialisierung des Verfahrens ist auf dem Kommunikationsmittel 11 ein Programm bzw. eine Software bzw. eine *App* installiert. Diese kann sich der Fahrzeugführer auf bekannte Art und Weise, vorzugsweise kostenlos, aus einem *App-Store* oder dergleichen aus dem Internet herunterladen. Dazu bietet der Hersteller der Komponente bzw. Hubladebühne eine auf die Funktionen der Komponente abgestimmte *App* an. Über diese *App* kann der Fahrzeugführer kommunizieren, aber auch die Funktionen der Komponente ansteuern.

Sobald die Kommunikation zwischen dem Kommunikationsmittel 11 und dem Fahrzeug 10 bzw. der Komponente gemäß dem ersten Schritt 12 hergestellt wurde, können in einem zweiten Schritt 14 sämtliche Daten zur Analyse, Identifikation und/oder Fehlerbehebung und dergleichen, die in dem ersten Schritt von dem Fahrzeug 10 bzw. der Komponente auf das Kommunikationsmittel 11 übertragen wurde, über eine Verbindung 15 an ein elektronisches Datenbearbeitungsnetzwerk 16 übertragen werden. Die von dem Kommunikationsmittel 11 an das Datenbearbeitungsnetzwerk 16 übertragenen Daten werden als ausgehende Daten bezeichnet. In diesem zweiten Schritt 14 werden die ausgehenden Daten in dem Datenbearbeitungsnetzwerk 16, bei dem es sich um eine *Cloud* handeln kann, weiterverarbeitet bzw. analysiert, identifiziert und ggf. Maßnahmen für eine Fehlerbehebung oder Fernwartung generiert. Bei der Verbindung 15 zwischen dem Kommunikationsmittel 11 und dem Datenbearbeitungsnetzwerk 16 handelt es sich um eine Fernfeldverbindung via WLAN, 5G oder IEEE802.1.

Bei dem Datenbearbeitungsnetzwerk 16 kann es sich um ein von dem Hersteller der Komponente betreutes Netzwerk handeln. Um auf die Daten in diesem Netzwerk 16 zugreifen zu können, ist es denkbar, dass sich Nutzer registrieren sowie authentifizieren müssen. Es ist jedoch alternativ auch denkbar, dass auf die Daten des Datenbearbeitungsnetzwerks 16 frei zugegriffen werden kann.

Erfindungsgemäß ist es vorgesehen, dass die in dem elektronischen Datenbearbeitungsnetzwerk 16 prozessierten ausgehenden Daten als eingehende Daten wieder zurück an das Kommunikationsmittel 11 über die Verbindung 15 übertragen werden. Dies kann beispielsweise bei der Abfrage bestimmter Fehlercodes, Informationen über Servicestellen oder Werkstätten in der Reichweite des Fahrzeuges 10 erfolgen. Alternativ ist es ebenfalls möglich, dass die ausgehenden Daten von dem Datenbearbeitungsnetzwerk 16 an eine Netz-Applikation 17 übertragen werden oder die Netz-Applikation 17 greift auf die ausgehenden Daten in dem Datenbearbeitungsnetzwerk 16 zu. Die Netz-Applikation 17 analysiert die ausgehenden Daten, insbesondere die Identifikationsdaten, die Verifikationsdaten, die Betriebsparameter und/oder die Fehlerinformationsdaten und stellt in Abhängigkeit von den analysierten Daten eine direkte Verbindung 18 zu dem Kommunikationsmittel 11 her. Bei der Netz-Applikation 17 kann es sich beispielsweise um einen Servicepartner oder einen Servicemitarbeiter handeln. Dieser Servicepartner, der sich ggf. für die Benutzung des Datenbearbeitungsnetzwerkes 16 registriert hat, stellt den Fahrzeugführer mindestens einen Vorschlag zur Behebung des Fehlers bzw. der Störung zur Verfügung. Dies kann entweder über eine Textnachricht, über eine Sprachnachricht, über ein Telefonat oder ein Videotelefonat erfolgen. Auch die Verbindung 18 zwischen dem Servicepartner und dem Fahrzeugführer ist eine Fernfeldverbindung via WLAN, 5G oder IEEE802.1. Durch den Zugriff auf die Daten in dem Datenbearbeitungsnetzwerk 16, welches sich nahezu an einem beliebigen Ort befinden kann, kann auch der Servicepartner bzw. die Netz-Applikation 17 ortsunabhängig die Durchführung der Analyse, der Identifikation und/oder die Fehlerbehebung anwenden. Andererseits kann der Fahrzeugführer unabhängig von seinem Aufenthaltsort über das Datenbearbeitungsnetzwerk 16 unter Verwendung der *App* auf seinem Kommunikationsmittel 11 auf den Service der Netz-Applikation 17 zugreifen.

Außerdem ist es bei dem in der Fig. 1 schematisch dargestellten zweiten Schritt 14 denkbar, dass auch ein Flottenmanager 20, der die Aufsicht und die Organisation mehrerer Fahrzeuge, darunter auch das Fahrzeug 10, durchführt, auf die ausgehenden Daten des Kommunikationsmittels 11 in dem Datenbearbeitungsnetzwerk 16 zugreift. Der Flottenmanager 20 kann die ausgehenden Daten, die er über eine Verbindung 21 aus dem Netzwerk 16 ausliest, analysieren und entscheiden, ob diese zu einer signifikanten Verzögerung eines Lieferprozesses führt, die es gilt durch Gegenmaßnahmen auszugleichen. So ist es beispielsweise denkbar, dass bei einem größeren Schaden der Flottenmanager 20 ein Ersatzfahrzeug zu dem Ort des liegengebliebenen Fahrzeuges 10 navigiert, damit die Ware umgeladen werden und die Auslieferung fortgesetzt werden kann.

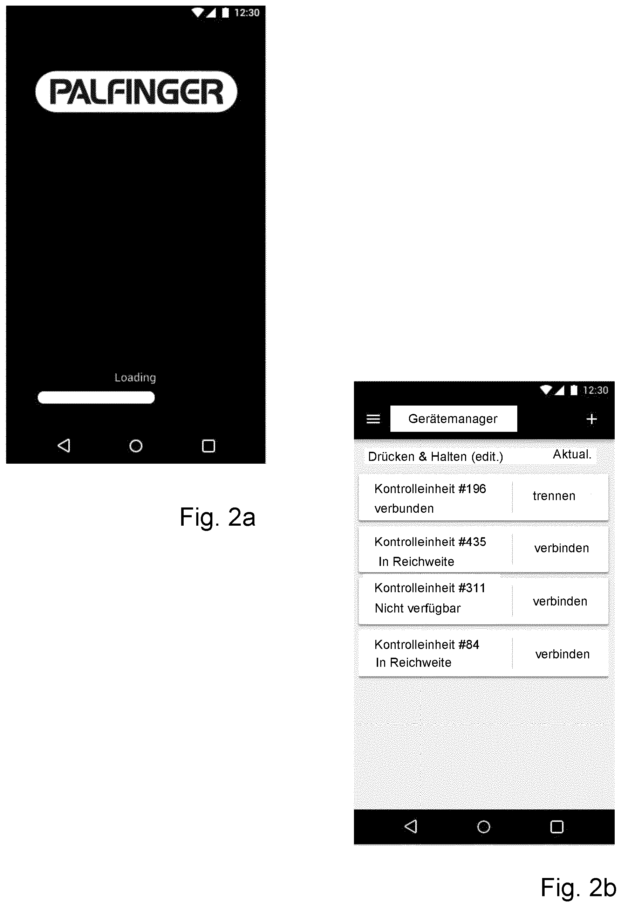

In den Fig. 2a bis 2i sind verschiedene Oberflächen der Bediensoftware bzw. der *App* auf dem Kommunikationsmittel 11 abgebildet, über die der Fahrzeugführer das Verfahren initialisieren bzw. steuern und kontrollieren kann. So zeigt Fig. 2a ein mögliches Ausführungsbeispiel für einen Startbildschirm der *App.* Nach der Aktivierung der *App* bzw. der Initialisierung der Verbindung 13 wird diese *App* geöffnet und fahrzeugrelevante Daten werden geladen. Dabei ist es denkbar, dass zeitgleich Softwareupdates geladen werden oder bereits Verbindungen mit dem Netzwerk 16 und/oder der Netz-Applikation 17 hergestellt werden. Gegebenenfalls ist es erforderlich, dass sich zunächst der Fahrzeugführer zu identifizieren hat, bevor er auf die Anwendung zugreifen kann. Gleichermaßen kann es notwendig sein, die Verbindung 13 zwischen der Komponente und des Kommunikationsmittels 11 über die *App* zu verifizieren.

Die Fig. 2b zeigt ein Beispiel für ein Erscheinungsbild eines Gerätemanagers. Hier werden verschiedene Kontrolleinheiten der Komponente angezeigt und angegeben, ob diese mit dem Kommunikationsmittel 11 verbunden sind oder nicht. Außerdem wird angezeigt, ob diese Einheiten oder Komponenten prinzipiell in Reichweite, d. h. zur Verfügung stehen oder außer Reichweite, d. h. nicht verfügbar sind. Außerdem kann der Fahrzeugführer über diese in der Fig. 2b dargestellte Oberfläche die Verbindung 13 zu den Einheiten bzw. Komponenten auf einfache Art und Weise durch Betätigung des Bedienfeldes trennen bzw. verbinden.

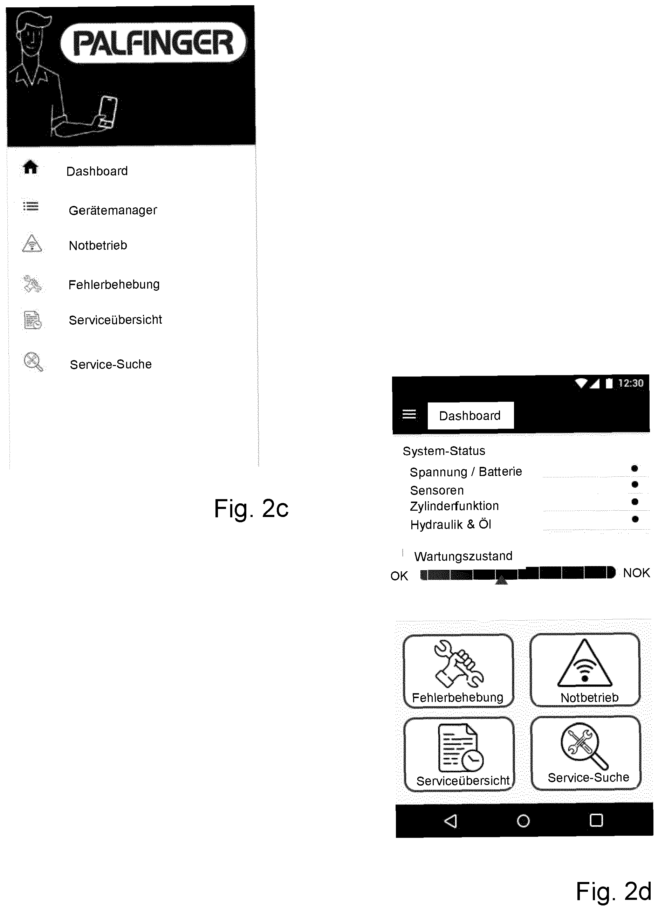

Die Fig. 2c stellt ein mögliches Ausführungsbeispiel einer Menüübersicht dar. Hier kann der Fahrzeugführer zwischen einem *Dashboard,* dem Gerätemanager, einem Notbetrieb, einer Fehlerbehebung, einer Serviceübersicht sowie einer Servicesuche wählen. Bei dem in der Fig. 2d beispielhaft dargestellten *Dashboard* handelt es sich um eine virtuelle Instrumententafel bzw. ein virtuelles Armaturenbrett. Dieses *Dashboard* stellt eine zentrale Bedieneroberfläche des Kommunikationsmittels 11 dar. Hier kann der Fahrzeugführer auf einen Blick den Zustand der wichtigsten Komponenten erkennen und über einfache sowie intuitiv verständliche Befehlsoptionen weitere Verfahrensschritte einleiten. So bieten die vier in der unteren Hälfte der Bedieneroberfläche dargestellten Optionen die Möglichkeiten eine Fehlerbehebung, einen Notbetrieb, eine Serviceübersicht oder eine Servicesuche zu starten. Je nachdem, welche dieser Optionen von dem Fahrzeugführer ausgewählt wird, können verschiedene Verbindungen 15, 18, 19, 21 bzw. 13 hergestellt werden.

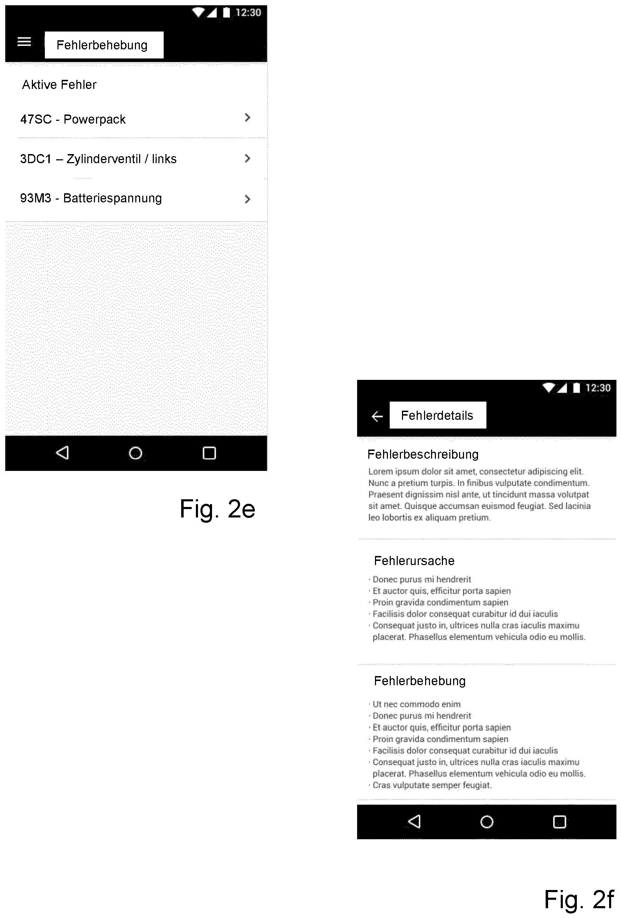

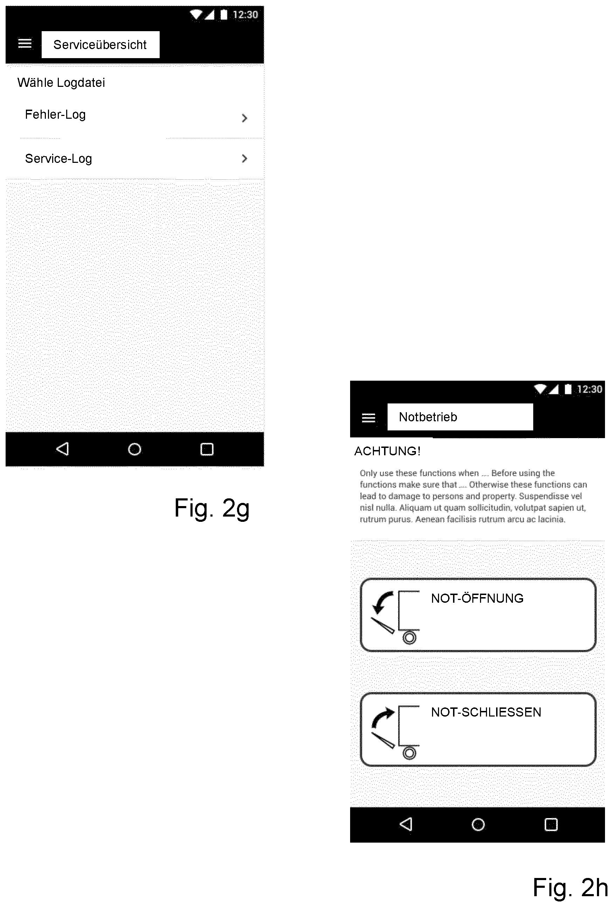

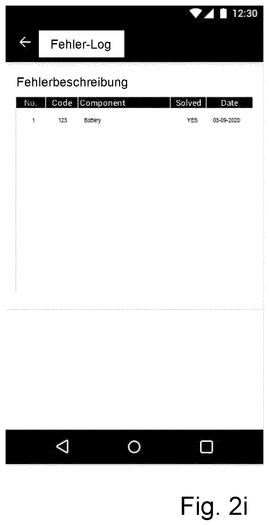

Die Fig. 2e, 2f und 2i zeigen beispielhaft verschiedene Menüführungen zur Fehlerbehebung, zu Fehlerdetails sowie zu einem virtuellen Logbuch für Fehler. Die Bedieneroberfläche gemäß Fig. 2g bietet eine Übersicht über verschiedene Servicefunktionen.

In der Fig. 2h ist ein Ausführungsbeispiel für eine Bedieneroberfläche für den Notbetrieb dargestellt. Durch die großen Bedienfelder, die eindeutigen Befehle sowie die Symbole, lassen sich die verschiedenen Möglichkeiten des Notbetriebs ohne einen Zweifel bedienen. Außerdem wird der Fahrzeugführer beim Start des Notbetriebs darauf hingewiesen, dass der Notbetrieb aktiviert wurde. Dies kann akustisch, optisch oder haptisch erfolgen.

Ein weiteres Ausführungsbeispiel der Anwendersoftware kann es vorsehen, dass gleich zu Beginn des Verfahrens eine Sprache auszuwählen ist, sodass im Weiteren sämtliche Menüpunkte der *App* auf einer Sprache angezeigt werden, die dem Fahrzeugführer verständlich ist.

Neben den hier beispielhaft dargestellten Erscheinungsformen der Bedieneroberflächen der Fig. 2a bis 2i sind noch weitere Bedienfelder sowie Designs denkbar. Das erfindungsgemäße Verfahren soll ausdrücklich nicht auf die in den Fig. 2a bis 2i dargestellten Funktionen eingeschränkt sein.

### Bezugszeichenliste:

- 10: Fahrzeug
- 11: Kommunikationsmittel
- 12: erster Schritt
- 13: Verbindung
- 14: zweiter Schritt
- 15: Verbindung
- 16: Datenbearbeitungsnetzwerk
- 17: Netzapplikation
- 18: Verbindung
- 19: Verbindung
- 20: Flottenmanager
- 21: Verbindung

## Patentansprüche

1. Verfahren zur Durchführung einer Analyse, Identifikation und/oder Fehlerbehebung, vorzugsweise einer Fernwartung, einer Hubladebühne eines Lastkraftwagens, wobei zunächst eine Nahfeldverbindung (13), vorzugsweise eine Bluetooth^{®}-Verbindung, zwischen mindestens einem mobilen Kommunikationsmittel (11) und einer Steuereinheit der Hubladebühne hergestellt wird und Identifikationsdaten, Verifikationsdaten, Betriebsparameter und/oder Fehlerinformations-daten zwischen dem Kommunikationsmittel (11) und der Steuereinheit ausgetauscht werden und diese ausgehenden Daten von dem mindestens einen mobilen Kommunikationsmittel (11) über eine Fernfeldverbindung (15) an ein elektronisches Datenbearbeitungsnetzwerk (16) übertragen werden und wobei in Abhängigkeit von den ausgehenden Daten von dem Datenbearbeitungsnetzwerk (16) eingehende Daten direkt an das mobile Kommunikationsmittel (11) zurück übertragen werden oder mindestens eine Netz-Applikation (17), an welche die ausgehenden Daten zuvor von dem Datenbearbeitungsnetzwerk (16) übertragen wurden, eingehende Daten an das mobile Kommunikationsmittel (11) zurück überträgt, und wobei der Austausch der Daten zwischen der Hubladebühne und dem mindestens einen mobilen Kommunikationsmittel (11) durch eine Bedienperson initialisiert wird oder bei einer Fehlfunktion der Hubladebühne der Datenaustausch zwischen der Hubladebühne und dem mindestens einen mobilen Kommunikationsmittel (11) automatisch initialisiert wird und wobei für ein *Pairing,* d.h. für die Verbindung zwischen der Hubladebühne und dem mindestens einen mobilen Kommunikationsmittel (11) ein Code in eine Bedieneinheit der Hubladebühne eingegeben wird, wobei der eingegebene Code von der Bedieneinheit der Hubladebühne auf Validität geprüft wird und die Bedieneinheit bei einer positiven Validitätsprüfung des Codes über ein Protokoll, das mindestens eine mobile Kommunikationsmittel (11) aktiviert.

2. Verfahren nach Anspruch 1, **dadurch gekennzeichnet, dass** in Abhängigkeit von den Identifikationsdaten, Verifikationsdaten, Betriebsparametern und/oder Fehlerinformationsdaten ein weiterer Austausch von Daten zwischen dem Datenbearbeitungsnetzwerk (16) und der mindestens einen Netz-Applikation (17) und/oder einem Flottenmanager (20) von mehreren Fahrzeugen erfolgt, insbesondere initiiert wird.

3. Verfahren nach Anspruch 1 oder 2, **dadurch gekennzeichnet, dass** in Abhängigkeit von den Identifikationsdaten, Verifikationsdaten, Betriebsparametern und/oder Fehlerinformationsdaten eine direkte Sprach- und/oder Videokommunikation zwischen der mindestens einen Netz-Applikation (17) und dem mobilen Kommunikationsmittel (11) aufgebaut wird.

4. Verfahren nach einem der vorherigen Ansprüche, **dadurch gekennzeichnet, dass** in Abhängigkeit von den Identifikationsdaten, Verifikationsdaten, Betriebsparametern und/oder Fehlerinformationsdaten über das mobile Kommunikationsmittel (11) ein Datenaustausch zwischen der mindestens einen Netz-Applikation (17) und/oder dem Flottenmanager (20) und der Steuereinheit der mindestens einen Komponente aufgebaut wird.

5. Verfahren nach einem der vorherigen Ansprüche, **dadurch gekennzeichnet, dass** in Abhängigkeit von den Identifikationsdaten, Verifikationsdaten, Betriebsparametern und/oder Fehlerinformationsdaten die Netz-Applikation (17) weitere Maßnahmen initialisiert werden, wie beispielsweise Bestellung und Anlieferung von Ersatzteilen, Koordination eines Serviceauftrags, Umprogammierung der Software der Komponente, Update der Software der Komponente, Fernsteuerung wenigstens einiger, insbesondere für die Bedienperson gesperrter, Funktionen, insbesondere GEO-Fencing.

6. Verfahren nach einem der vorherigen Ansprüche, **dadurch gekennzeichnet, dass** in Abhängigkeit von den Identifikationsdaten, Verifikationsdaten, Betriebsparametern und/oder Fehlerinformationsdaten der Flottenmanager (20) ein Ersatzfahrzeug zu dem Fahrzeug (10), das die Daten übertragen hat, bestellt oder ein Lieferplan für Waren, die von dem Fahrzeug (10), das die Daten übertragen hat, transportiert wird, angepasst wird.

7. Verfahren nach einem der vorherigen Ansprüche, **dadurch gekennzeichnet, dass** für den Austausch der Daten im Nahfeld ein eigenes proprietäres Protokoll, insbesondere WLAN oder Bluetooth^{®}, und im Fernfeld Protokolle für Fernfeldkommunikation verwendet werden, nämlich WLAN, 5G oder IEEE 802.1, wobei der Austausch der Daten verschlüsselt erfolgt.

8. Verfahren nach einem der vorherigen Ansprüche, **dadurch gekennzeichnet, dass** auf das mobile Kommunikationsmittel (11) für die Fernwartung und/oder den Datenaustausch eine, insbesondere kostenfrei aus einem *App-Store* ladbare, Anwendungssoftware (*Android-, IOS-App*) geladen bzw. in Betrieb genommen wird.

9. Verfahren nach einem der vorherigen Ansprüche, **dadurch gekennzeichnet, dass** es sich bei den eingehenden Daten um Fehlerinformationsdaten, Steuerbefehle, Bedienhinweise und/oder Vorschläge handelt.

10. Verfahren nach einem der vorherigen Ansprüche, **dadurch gekennzeichnet, dass** für ein *Pairing,* d.h. für die Verbindung, zwischen der Komponente und dem mindestens einen mobilen Kommunikationsmittel (11) eine Tastenkombination in eine Bedieneinheit der Komponente eingegeben wird, wobei der eingegebene Code von der Bedieneinheit der Komponente auf Validität geprüft wird.

11. Verfahren nach Anspruch 10, **dadurch gekennzeichnet, dass** die Bedieneinheit bei einer positiven Validitätsprüfung des Codes über ein proprietäres CAN-Bus Protokoll das mindestens eine mobile Kommunikationsmittel (11) aktiviert, insbesondere in einen Modus zur Durchführung einer Analyse, Identifikation und/oder Fehlerbehebung versetzt.

12. Verfahren nach einem der vorherigen Ansprüche, **dadurch gekennzeichnet, dass** im Falle einer Störung und/oder eines Defektes der Komponente und/oder einer Sensorik der Komponente, insbesondere von einer Bedienperson, über eine Bedieneinheit der Komponente oder über das mobile Kommunikationsmittel (11) ein Notbetrieb der mindestens einen Komponente gestartet wird, wobei durch diesen Notbetrieb die notwendigen Funktionen für die Steuerung der Komponente zur Verfügung gestellt werden.

13. Verfahren nach Anspruch 12, **dadurch gekennzeichnet, dass** bei Aktivierung des Notbetriebs durch das mobile Kommunikationsmittel ein akustisches und/oder ein optisches Signal erzeugt wird, durch welches die Bedienperson über die Störung bzw. den Defekt der Komponente bzw. der Sensorik sowie über die eingeschränkte Funktionalität der Komponente und insbesondere die damit verbundenen Gefahren informiert wird.

14. Verfahren nach Anspruch 12 oder 13, **dadurch gekennzeichnet, dass** nach Beendigung der Nutzung der Komponente auch der Notbetrieb automatisch durch die Steuerung beendet wird.

15. Verfahren nach einem der Ansprüche 12 bis 14, **dadurch gekennzeichnet, dass** nach einer Betätigung eines Notbetrieb-Signalgebers, vorzugsweise einer NotbetriebSchaltfläche oder -knopfes, eine Nahfeldkommunikation, insbesondere eine Bluetooth^{®}-Verbindung, zwischen der Bedieneinheit der Komponente und dem mobilen Kommunikationsmittel (11) hergestellt wird und über einen CAN-Bus die Verbindung zur Steuerung der Komponente erfolgt.

16. Kommunikationssystem zur Durchführung eines Verfahrens zur Durchführung einer Analyse, Identifikation und/oder Fehlerbehebung, vorzugsweise einer Fernwartung, einer Hubladebühne eines Lastkraftwagens, gemäß Anspruch 1 mit mindestens einem mobilen Kommunikationsmittel (11) und einer Steuereinheit der Hubladebühne sowie einem Datenbearbeitungsnetzwerk (16) und mindestens eine Netz-Applikation (17).

## Claims

1. Method for performing an analysis, identification and/or troubleshooting, preferably a remote maintenance, on a lifting platform of a heavy goods vehicle, wherein first a near-field connection (13), preferably a Bluetooth^{®} connection, is produced between at least one mobile communication means (11) and a control unit of the lifting platform and identification data, verification data, operating parameters and/or error information data are interchanged between the communication means (11) and the control unit, and these outbound data are transmitted to an electronic data processing network (16) by the at least one mobile communication means (11) via a far-field connection (15), and wherein the outbound data are taken as a basis for the data processing network (16) to transmit inbound data directly back to the mobile communication means (11) or for at least one network application (17) to which the outbound data have previously been transmitted by the data processing network (16) to transmit inbound data back to the mobile communication means (11), and wherein the interchange of the data between the lifting platform and the at least one mobile communication means (11) is initialized by an operator or, in the event of a malfunction of the lifting platform, the data interchange between the lifting platform and the at least one mobile communication means (11) is initialized automatically, and wherein *pairing,* i.e. the connection, between the lifting platform and the at least one mobile communication means (11) is accomplished by entering a code into an operating unit of the lifting platform, the entered code being checked for validity by the operating unit of the lifting platform, and the operating unit using a protocol to activate the at least one mobile communication means (11) if the validity check on the code is positive.

2. Method according to Claim 1, **characterized in that** the identification data, verification data, operating parameters and/or error information data are taken as a basis for in particular initiating a further interchange of data between the data processing network (16) and the at least one network application (17) and/or a fleet manager (20) of multiple vehicles.

3. Method according to Claim 1 or 2, **characterized in that** the identification data, verification data, operating parameters and/or error information data are taken as a basis for setting up a direct voice and/or video communication between the at least one network application (17) and the mobile communication means (11).

4. Method according to any one of the preceding claims, **characterized in that** the identification data, verification data, operating parameters and/or error information data are taken as a basis for using the mobile communication means (11) to set up a data interchange between the at least one network application (17) and/or the fleet manager (20) and the control unit of the at least one component.

5. Method according to any one of the preceding claims, **characterized in that** the identification data, verification data, operating parameters and/or error information data are taken as a basis for the network application (17) to initialize further measures, for example ordering and delivering spare parts, coordinating a service order, reprogramming the software of the component, updating the software of the component, remotely controlling at least some functions, in particular functions that are disabled for the operator, in particular geofencing.

6. Method according to any one of the preceding claims, **characterized in that** the identification data, verification data, operating parameters and/or error information data are taken as a basis for the fleet manager (20) to order a replacement vehicle for the vehicle (10) that transmitted the data, or for adapting a delivery schedule for goods transported by the vehicle (10) that transmitted the data.

7. Method according to any one of the preceding claims, **characterized in that** the interchange of the data is accomplished in the near field by using a dedicated proprietary protocol, in particular WLAN or Bluetooth^{®}, and in the far field by using protocols for far-field communication, namely WLAN, 5G or IEEE 802.1, the interchange of the data being encrypted.

8. Method according to any one of the preceding claims, **characterized in that** the remote maintenance and/or the data interchange are/is accomplished by loading an application software (*Android, IOS aρρ*)*,* loadable in particular free of charge from an *app store,* onto the mobile communication means (11) and putting it into operation.

9. Method according to any one of the preceding claims, **characterized in that** the inbound data are error information data, control commands, operating instructions and/or suggestions.

10. Method according to any one of the preceding claims, **characterized in that** *pairing,* i.e. the connection, between the component and the at least one mobile communication means (11) is accomplished by entering a key combination into an operating unit of the component, the entered code being checked for validity by the operating unit of the component.

11. Method according to Claim 10, **characterized in that** the operating unit uses a proprietary CAN bus protocol to activate the at least one mobile communication means (11), in particular put it into a mode for performing an analysis, identification and/or troubleshooting, if the validity check on the code is positive.

12. Method according to any one of the preceding claims, **characterized in that** in the event of a fault and/or defect in the component and/or a sensor system of the component, in particular an operator, using an operating unit of the component or using the mobile communication means (11), starts an emergency mode of the at least one component, this emergency mode providing the necessary functions for controlling the component.

13. Method according to Claim 12, **characterized in that** when the emergency mode is activated, the mobile communication means generates an audible and/or visual signal that informs the operator about the fault or defect in the component or the sensor system and also about the restricted functionality of the component and in particular the associated hazards.

14. Method according to Claim 12 or 13, **characterized in that** after use of the component has ended, the emergency mode is also automatically terminated by the control.

15. Method according to any one of Claims 12 to 14, **characterized in that** after an emergency mode signal transmitter, preferably an emergency mode button or pushbutton, has been operated, a near-field communication, in particular a Bluetooth^{®} connection, is produced between the operating unit of the component and the mobile communication means (11), and a CAN bus is used to provide the connection for controlling the component.

16. Communication system for carrying out a method for performing an analysis, identification and/or troubleshooting, preferably a remote maintenance, on a lifting platform of a heavy goods vehicle, according to Claim 1, having at least one mobile communication means (11) and a control unit of the lifting platform and also a data processing network (16) and at least one network application (17).

## Revendications

1. Procédé permettant d'effectuer une analyse, une identification et/ou un dépannage, de préférence une télémaintenance, d'un hayon élévateur d'un poids lourd, dans lequel d'abord une liaison en champ proche (13), de préférence une liaison Bluetooth^{®}, est établie entre au moins un moyen de communication mobile (11) et une unité de commande du hayon élévateur, et des données d'identification, des données de vérification, des paramètres de fonctionnement et/ou des données d'informations d'erreur sont échangés entre le moyen de communication (11) et l'unité de commande, et ces données sortantes sont transmises par ledit au moins un moyen de communication mobile (11) par l'intermédiaire d'une liaison en champ lointain (15) à un réseau de traitement de données électronique (16), et dans lequel, en fonction des données sortantes, des données entrantes provenant du réseau de traitement de données (16) sont directement retransmises au moyen de communication mobile (11), ou au moins une application de réseau (17), à laquelle les données sortantes ont auparavant été transmises par le réseau de traitement de données (16), retransmet des données entrantes au moyen de communication mobile (11), et dans lequel l'échange des données entre le hayon élévateur et ledit au moins un moyen de communication mobile (11) est initialisé par un opérateur, ou en cas de dysfonctionnement du hayon élévateur, l'échange de données entre le hayon élévateur et ledit au moins un moyen de communication mobile (11) est initialisé automatiquement, et dans lequel pour un couplage, c'est-à-dire pour la liaison entre le hayon élévateur et ledit au moins un moyen de communication mobile (11), un code est entré dans une unité d'utilisation du hayon élévateur, dans lequel le code entré est vérifié quant à sa validité par l'unité d'utilisation du hayon élévateur, et en cas de vérification de validité positive du code, l'unité d'utilisation active ledit au moins un moyen de communication (11) par l'intermédiaire d'un protocole.

2. Procédé selon la revendication 1, **caractérisé en ce qu'**en fonction des données d'identification, des données de vérification, des paramètres de fonctionnement et/ou des données d'informations d'erreur, un autre échange de données entre le réseau de traitement de données (16) et de ladite au moins une application de réseau (17) et/ou un gestionnaire de flotte (20) de plusieurs véhicules est effectué, en particulier initié.

3. Procédé selon la revendication 1 ou 2, **caractérisé en ce qu'**en fonction des données d'identification, des données de vérification, des paramètres de fonctionnement et/ou des données d'informations d'erreur, une communication vocale et/ou vidéo directe est établie entre ladite au moins une application de réseau (17) et le moyen de communication mobile (11).

4. Procédé selon l'une quelconque des revendications précédentes, **caractérisé en ce qu'**en fonction des données d'identification, des données de vérification, des paramètres de fonctionnement et/ou des données d'informations d'erreur, un échange de données entre ladite au moins une application de réseau (17) et/ou le gestionnaire de flotte (20) et l'unité de commande dudit au moins un composant est établi par l'intermédiaire du moyen de communication mobile (11).

5. Procédé selon l'une quelconque des revendications précédentes, **caractérisé en ce qu'**en fonction des données d'identification, des données de vérification, des paramètres de fonctionnement et/ou des données d'informations d'erreur, l'application de réseau (17) initialise d'autres mesures, comme par exemple la commande et la livraison de pièces de rechange, la coordination d'une commande d'intervention, la reprogrammation du logiciel du composant, la mise à jour du logiciel du composant, la télécommande d'au moins certaines fonctions, en particulier verrouillées pour l'opérateur, en particulier le géorepérage.

6. Procédé selon l'une quelconque des revendications précédentes, **caractérisé en ce qu'**en fonction des données d'identification, des données de vérification, des paramètres de fonctionnement et/ou des données d'informations d'erreur, le gestionnaire de flotte (20) commande un véhicule de remplacement pour le véhicule (10) qui a transmis les données, ou un calendrier de livraison pour des marchandises qui sont transportées par le véhicule (10) qui a transmis les données est adapté.

7. Procédé selon l'une quelconque des revendications précédentes, **caractérisé en ce que** pour l'échange des données en champ proche, un protocole propriétaire spécifique, en particulier Wi-Fi ou Bluetooth^{®}, est utilisé, et en champ lointain, des protocoles pour la communication en champ lointain, notamment Wifi, 5G ou IEEE 802.1, sont utilisés, l'échange des données étant effectué de manière cryptée.

8. Procédé selon l'une quelconque des revendications précédentes, **caractérisé en ce qu'**un logiciel d'application (appli Android, IOS) est téléchargé, en particulier peut être téléchargé gratuitement à partir d'une boutique d'applications, ou mis en service sur le moyen de communication mobile (11) pour la télémaintenance et/ou l'échange de données.

9. Procédé selon l'une quelconque des revendications précédentes, **caractérisé en ce que** les données entrantes sont des données d'informations d'erreur, des instructions de commande, des indications d'utilisation et/ou des suggestions.

10. Procédé selon l'une quelconque des revendications précédentes, **caractérisé en ce que** pour un couplage, c'est-à-dire pour la liaison, entre le composant et ledit au moins un moyen de communication mobile (11), un raccourci clavier est entré dans une unité d'utilisation du composant, dans lequel le code entré est vérifié quant à sa validité par l'unité d'utilisation du composant.

11. Procédé selon la revendication 10, **caractérisé en ce qu'**en cas de vérification de validité positive du code, l'unité d'utilisation active par l'intermédiaire d'un protocole de bus CAN propriétaire ledit au moins un moyen de communication mobile (11), en le mettant en particulier dans un mode pour effectuer une analyse, une identification et/ou un dépannage.

12. Procédé selon l'une quelconque des revendications précédentes, **caractérisé en ce qu'**en cas de panne et/ou d'un défaut du composant et/ou d'un système de capteurs du composant, en particulier un opérateur démarre, par l'intermédiaire d'une unité d'utilisation du composant ou par l'intermédiaire du moyen de communication mobile (11), un fonctionnement de secours dudit au moins un composant, dans lequel ce fonctionnement de secours assure les fonctions nécessaires à la commande du composant.

13. Procédé selon la revendication 12, **caractérisé en ce qu'**en cas d'activation du fonctionnement de secours, le moyen de communication mobile produit un signal acoustique et/ou optique qui informe l'opérateur sur la panne ou le défaut du composant ou du système de capteurs ainsi que la fonctionnalité limitée du composant et en particulier les dangers associés.

14. Procédé selon la revendication 12 ou 13, **caractérisé en ce qu'**après la fin de l'utilisation du composant, le fonctionnement de secours est également terminé automatiquement par l'unité de commande.

15. Procédé selon l'une quelconque des revendications 12 à 14, **caractérisé en ce qu'**après un actionnement d'un émetteur de signal de fonctionnement de secours, de préférence d'une touche ou d'un bouton de fonctionnement de secours, une communication en champ proche, en particulier une liaison Bluetooth^{®}, est établie entre l'unité d'utilisation du composant et le moyen de communication mobile (11), et la liaison avec l'unité de commande du composant est effectuée par l'intermédiaire d'un bus CAN.

16. Système de communication permettant d'effectuer un procédé pour effectuer une analyse, une identification et/ou un dépannage, de préférence une télémaintenance, d'un hayon élévateur d'un poids lourd selon la revendication 1, comprenant au moins un moyen de communication mobile (11) et une unité de commande du hayon élévateur ainsi qu'un réseau de traitement de données (16) et au moins une application de réseau (17).
